# EUROPEAN PATENT APPLICATION

(11) **EP 1 880 793 A2**
(43) Date of publication of application: **23.01.2008**
(21) Application number: 07252852.4
(22) Date of filing: 18.07.2007
(51) Int. Cl.: B23P 6/00, B23K 26/18, B23K 26/34, F01D 5/00

(54) **High pressure single turbine blade tip repair with laser cladding**

(30) Priority: 20.07.2006 US 490295
(71) Applicant: Honeywell International Inc., Morristown, NJ 07960 (US)
(72) Inventor: Guo, Wen, Greenville, SC 29615 (US); Sankaranarayanan, Srikanth, Greer, SC 29650 (US); Taylor, Clyde R., Laurens, SC 29360 (US)
(74) Representative: Hucker, Charlotte Jane

(57) **Abstract**

Methods are provided for repairing a damaged section of an air-cooled turbine blade (100), the blade (100) having a first wall (114), a second wall (116), a trailing edge (140), and a plurality of cooling holes (132), the plenum (131) formed between the first and second walls (114, 116) and having a predetermined shape, and the plurality of cooling holes (132) formed on the trailing edge (140) in flow communication with the plenum (131) and having predetermined shapes. In one embodiment, and by way of example only, the method includes the steps of injecting (408) a filler material into the blade plenum (131) and the plurality of blade cooling holes (132), the filler material capable of solidifying into the predetermined shapes of the blade plenum (131) and blade cooling holes (132). Then, the damaged section of the blade (100) is laser welded and machined to original dimensions. Next, the filler material is removed.

## Description

### TECHNICAL FIELD

The present invention relates to gas turbine components and, more particularly, to processes used in the repair of bas turbine components such as turbine blades.

### BACKGROUND

Gas turbine engines, such as turbofan gas turbine engines, may be used to power various types of vehicles and systems, such as, for example, aircraft.
Typically, these engines include turbine blades (or airfoils) that are impinged by high-energy compressed air that causes a turbine of the engine to rotate at a high speed. Consequently, the blades are subjected to high heat and stress loadings which, over time, may reduce their structural integrity.

Modern aircraft jet engines have employed internal cooling systems in the blades to maintain the blade temperatures within acceptable limits. Typically, the blades are air cooled using, for example, bleed air from a compressor section of the engine. The air may enter near the blade root, and then flow through a cooling circuit formed in the turbine blade. The cooling circuit typically consists of a series of connected passages that form serpentine paths, which increase the cooling effectiveness by extending the length of the air flow path. In some cooling circuits, turbulator bumps, full or half pin fins, or other types of structured rougheners extend partially into the flow path to augment heat transfer from the blade to the cooling air. The air exits the blade via cooling holes that are typically formed on a trailing edge of the blade.

At times, the blade may become damaged and may need to be repaired. One conventional method of blade repair includes removing damaged portions of the blade, machining a replacement piece having a shape substantially similar to the original shape of the damaged portion, and welding the replacement piece onto the blade to be repaired. Although this method is useful for repairing thick-walled blades and blades having relatively simple shapes, is may not be as useful in the repair blades having internal cooling circuits formed therein. Specifically, the replacement piece may need to include a portion of the blade internal cooling circuit which may become misshapen during welding. Additionally, even if the replacement piece is appropriately shaped, the piece itself may be misaligned during welding.

Another typical blade repair method includes machining the blade tip until the damaged portion is removed, laser welding a buildup layer onto the blade tip, and machining the blade to its original shape. However, when blades experience excessive damage, the tip wall thickness after machining may not be sufficient for laser welding. Laser power may consume the thin wall of the blade tip, causing the blade walls that make up the internal cooling circuit to become misshapen. Consequently, the airflow through the flowpath may be affected.

Hence, there is a need for a method of repairing a blade having an internal cooling circuit that maintains the shape of the internal cooling circuit. It would be desirable for the method to be simple and relatively inexpensive to perform.

### BRIEF SUMMARY

The present invention provides methods for repairing a damaged section of an air-cooled turbine blade, the blade having a first wall, a second wall, a trailing edge, and a plurality of cooling holes, the plenum formed between the first and second walls and having a predetermined shape, and the plurality of cooling holes formed on the trailing edge in flow communication with the plenum and having predetermined shapes.

In one embodiment, and by way of example only, the method includes the steps of injecting a filler material into the blade plenum and the plurality of blade cooling holes, the filler material capable of solidifying into the predetermined shapes of the blade plenum and blade cooling holes. Then, the damaged section of the blade is removed by machining and the machined blade tip is laser welded. Next, the filler material is removed.

In another embodiment, and by way of example only, the method includes injecting ceramic into the blade plenum and the plurality of blade cooling holes, the ceramic capable of retaining the predetermined shapes of the blade plenum and blade cooling holes. Next, the damaged section of the blade is laser welded with a hand-held laser. The laser welded damaged section of the blade is then machined to an original shape. Next, the ceramic is leeched out of the blade plenum and blade cooling holes.

Other independent features and advantages of the preferred repair method will become apparent from the following detailed description, taken in conjunction with the accompanying drawings which illustrate, by way of example, the principles of the invention.

### BRIEF DESCRIPTION OF THE DRAWINGS

FIG. 1 is an isometric view of an exemplary damaged aircraft jet engine turbine rotor blade; and

FIG. 2 is a cross section view of a portion of the blade shown in FIG. 1;

FIG. 3 is another cross section view of the blade taken along line 3-3 shown in FIG. 2; and

FIG. 4 is a flow chart depicting a method for repairing the damaged aircraft jet engine turbine rotor blade.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

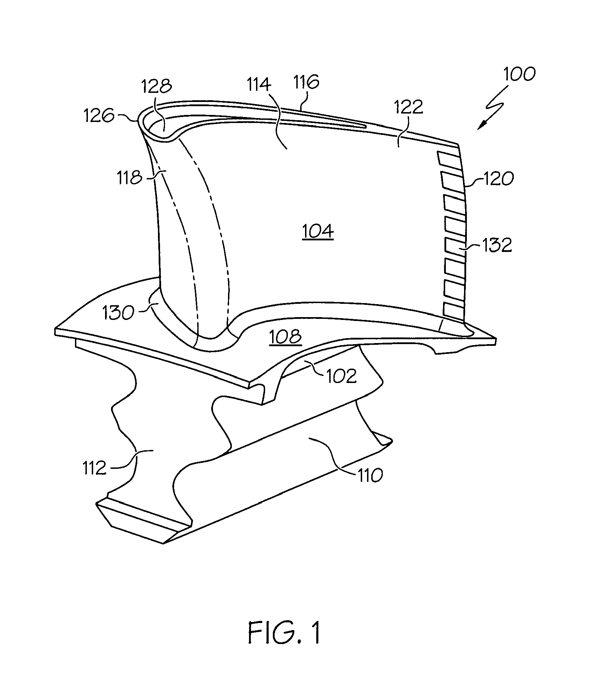

FIG. 1 illustrates an exemplary aircraft jet engine turbine rotor blade 100. The blade 100 is preferably made of a base material and may include various coatings thereon for protection thereof. In one exemplary embodiment, the base material is a single crystal superalloy, and may be, for example, a nickel-base superalloy, such as CMSX-3, or SC 180. It will be appreciated that other suitable materials may alternatively be used. The protective coatings may be one of numerous suitable materials that are corrosive resistant, such as environment-resistant diffusion aluminide and/or MCrAlY overlay coatings.

The blade 100 depicted in FIG. 1 includes a shank 102 and an airfoil 104. The shank 102 has a platform 108 and a root 110. The platform 108 is configured to radially contain turbine airflow. The root 110 provides an area in which a firtree 112 is machined. The firtree 112 is used to attach the blade 100 to a turbine rotor disc (not illustrated). It will be appreciated that in other embodiments, any one of numerous other shapes suitable for attaching the blade 100 to the turbine disc, may be alternatively machined therein. The airfoil 104 has two outer walls 114, 116 each having outer surfaces that together define an airfoil shape. The airfoil shape includes a leading edge 118, a trailing edge 140, a pressure side 122 along the first outer wall 114, a suction side 126 along the second outer wall 116, a blade tip 128, and an airfoil platform fillet 130. The trailing edge 140 includes a plurality of cooling openings 132 formed therein.

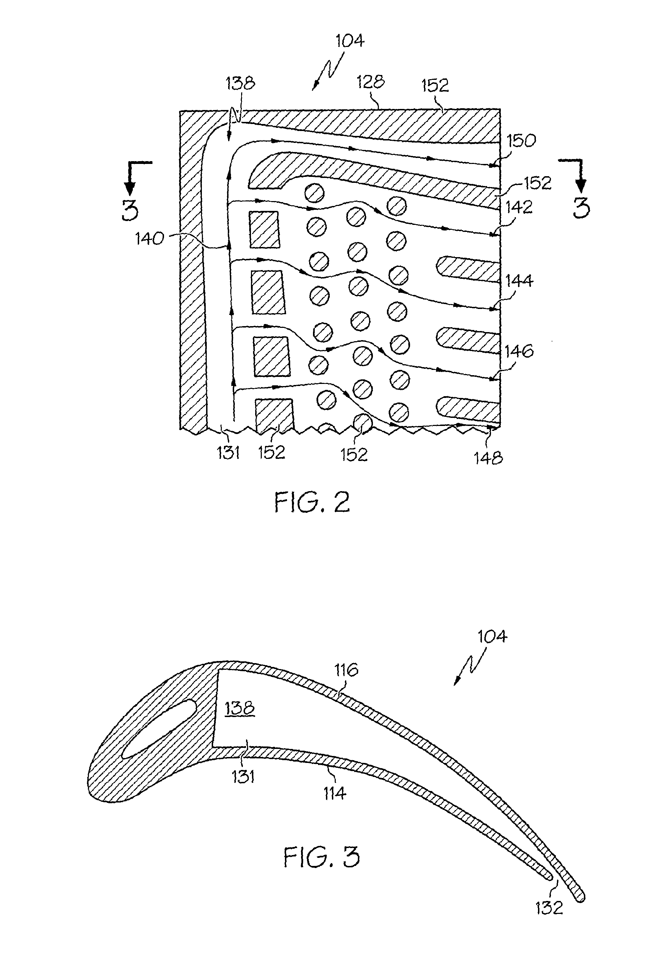

With reference now to FIGs. 2 and 3, cross sections of a portion of the airfoil 104 are shown. The airfoil 104 has a plenum 131 that includes an internal cooling circuit 138 which communicates with the plurality of cooling openings 132. The internal cooling circuit 138 is made up of a plurality of serpentine flowpaths 140, 142, 144, 146, 148, 150 that are defined, in part, by the airfoil outer walls 114, 116, and other structures 152 that extend inwardly therefrom. At least one of the flowpaths 140-150, preferably the flowpath 150 adjacent the blade tip 128, is defined by structures 152. The structures 152 may be any one of numerous suitable structures capable of enhancing heat transfer from the airfoil walls 114, 116 to the cooling air traveling along the flowpath 150. It will be appreciated that the flow paths may be disposed in any suitable predetermined pattern, and may include any appropriate number. Moreover, although the flowpaths 140-150 are shown in FIG. 2 as communicating with each other, the flow paths in other embodiments alternatively may not communicate with each other.

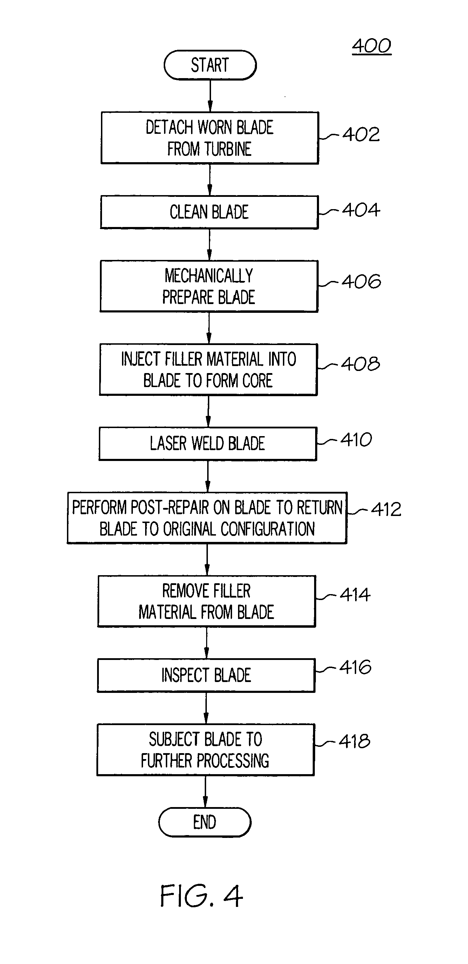

At times, the blade 100 may become worn and may need to be repaired. Turning now to FIG. 4, a flow diagram is provided showing an exemplary method 400 for repairing the turbine blade 100. Although the following method is described with reference to repair of a turbine blade, it should be understood that the method is in no way limited to blades, and may be used to repair other components that include serpentine flowpaths.

When one or more worn or degraded turbine blades are identified after an incoming inspection, they are typically detached from a turbine, step 402. Next, the blade 100 is cleaned, step 404. For example, step 404 may include chemical cleaning, such as by stripping a coating from the blade 100. The turbine blade 100 may further be mechanically prepared as well, step 406. In such case, the step of mechanically preparing a turbine blade 100 can include one or more processes including pre-repair machining and degreasing the surface to be repaired in order to remove any oxidation and dirt or other materials. In another exemplary embodiment, the preparation additionally includes a fluoride ion cleaning process to remove oxides from the worn blade 100. The fluoride ion cleaning process may be followed with a high-temperature vacuum cleaning process to remove excess fluoride remainder that may be on the blade 100. It will be appreciated that the present embodiment is not limited to these preparatory steps, and that additional, or different types and numbers of preparatory steps can be conducted.

Once the turbine blade 100 has been prepared, a suitable amount of a filler material is injected into the blade 100 to form a core having substantially the same shape as the internal cooling circuit 138, step 408. The filler material may be any one of numerous appropriate materials, such as a ceramic, inter-metallic or metal, that begins as a powder, gel, or liquid that may be pressurized and/or cured to form a solid. Additionally, the filler material is preferably formulated such that it is capable of maintaining its shape when solidified and exposed to conventional laser welding temperatures.

After the core is formed, the blade 100 is laser welded with a repair material, step 410. Step 410 may be employed to form a build up layer on the blade 100 or to melt the blade 100 to remove worn or degraded sections thereof. Any one of numerous laser welding techniques and laser welding equipment may be used. For example, in instances in which a localized portion of the blade 100 is to be welded, a hand-held laser may be used. In other circumstances, an automated laser system may be employed. The repair material is preferably a material that is substantially similar to the blade base material. For example, in one embodiment, the base material and repair material are made of a single crystal superalloy. Examples of suitable repair materials include, but are not limited to nickel base superalloys, such as Mar-M-247 and Inconel 738.

Next, at least one post-repair step 412 is performed to return the blade 100 to its original configuration. Post-repair steps may include processes that improve the blade's mechanical properties. For example, the blade 100 may be subjected to processes that include final machining the repaired components to a predetermined design dimension. Other post-repair steps may include improving the metallurgical properties of the blade 100; thus, the blade 100 may undergo a heat treatment to recover material properties of the welded layer and release welding stresses that may be present therein.

After the post-repair process step 412 is completed, the filler material is removed from the blade 100, step 414. The particular method of removal may be dependent on the formulation of the filler material. For example, in cases in which the filler material is a ceramic, the ceramic may be chemically leeched or degraded to form a liquid and the liquid may be washed out of the blade 100.

At least one inspection process can be performed as step 416 to determine whether any surface defects exist, such as cracks or other openings. An inspection process can be conducted using any well-known non-destructive inspection techniques including, but not limited to, a fluorescent penetration inspection ("FPI inspection"), and a radiographic inspection. If the repaired blade 100 passes a FPI inspection, and the blade 100 may be exposed to further processing, step 418. Further processing may include re-coating with a suitable material such as environment-resistant diffusion aluminide and/or MCrAlY overlay coatings, coating diffusion and aging heat treatments. Then, a final inspection is performed on the repaired blade 100. If the repaired blade 100 passes the final inspection, it is ready for use.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (400) for repairing a damaged section of an air-cooled turbine blade (100), the blade (100) having a first wall (114), a second wall (116), a trailing edge (140), and a plurality of cooling holes (132), a plenum (131) formed between the first and second walls (114, 116) and having a predetermined shape, and the plurality of cooling holes (132) formed on the trailing edge (140) in flow communication with the plenum (131) and having predetermined shapes, the method comprising the steps of:
injecting (408) a filler material into the blade plenum (131) and the plurality of blade cooling holes (132), the filler material capable of solidifying into the predetermined shapes of the blade plenum (131) and blade cooling holes (132);
laser welding (410) the damaged section of the blade (100); and
removing (414) the filler material.

2. The method of claim 1, wherein the filler material comprises a ceramic, inter-metallic or metal.

3. The method of claim 1, wherein the step of injecting (408) comprises injecting a liquid material into the blade plenum (131) and cooling holes (132) and heating the liquid material.

4. The method of claim 1, wherein the step of injecting (408) comprises injecting a powder material into the blade plenum (131) and cooling holes (132) and pressurizing the powder.

5. The method of claim 1, wherein the step of laser welding (410) comprises using a hand-held laser.

6. The method of claim 1, wherein the step of laser welding (410) comprises forming a buildup layer over the damaged section of the blade (100).

7. The method of claim 1, wherein the step of laser welding (410) comprises melting and reshaping the damaged section of the blade (100).

8. The method of claim 1, further comprising machining (412) the laser welded damaged section of the blade (100) to an original shape.

9. The method of claim 1, further comprising the step of chemically cleaning (404) the blade (100) before the step of injecting (408).

10. The method of claim 1, further comprising the step of machining (406) the blade (100) before the step of injecting (408).
